(19)

Europäisches
Patentamt
European
Patent Office
Office européen
des brevets

(11) **EP 1 897 838 A2**

(12) # EUROPEAN PATENT APPLICATION

(43) Date of publication:
**12.03.2008 Bulletin 2008/11**

(51) Int Cl.:
***B66C 9/12*** *(2006.01)*   ***B61L 3/12*** *(2006.01)*
***B61L 25/02*** *(2006.01)*

(21) Application number: **07017222.6**

(22) Date of filing: **03.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **06.09.2006 JP 2006241761**

(71) Applicant: **Murata Machinery, Ltd.**
**Kyoto-shi,**
**Kyoto 6018326 (JP)**

(72) Inventor: **Tanaka, Hiroshi**
**Inuyama-shi,**
**Aichi 484-8502 (JP)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(54) **Carriage with increased wheel pressures**

(57)    A pair of adherence rollers (24,25) are attached to a carriage (4) of a stacker crane (2) through rocking bases (26). The adherence rollers (24,25) are biased upwardly by springs (30) to adjust wheel pressures applied to the rollers. The rollers (24,25) contact the bottom surface of the traveling rail (12) under the wheel pressures determined by the springs (30) so that suitable wheel pressures can be applied to drive wheels (34) during acceleration.

F I G. 1

EP 1 897 838 A2

**Description**

Technical Field

The present invention relates to a carriage of a stacker crane or other rail guided vehicles, or a carriage of an overhead traveling vehicle. In particular, the present invention relates to a technique of keeping suitable wheel pressures applied to front and rear drive wheels of a carriage during acceleration.

Background Art

Patent Publication 1 (Japanese Patent Publication No. 2005-41383) studies the relationship between acceleration of a carriage and wheel pressures applied to front and rear drive wheels. The carriage has the front and rear drive wheels and front and rear travel motors. During acceleration, since the wheel pressure applied to the rear wheel is increased, the torque for acceleration is mainly distributed to the rear wheel. During deceleration, since the wheel pressure applied to the front wheel is increased, the torque for deceleration is mainly distributed to the front wheel. However in this approach, it is necessary to limit the output torque of the travel motor in correspondence with the wheel pressure. Therefore, high acceleration driving is difficult.

Disclosure of the Invention

Problems to be solved by the Invention

An object of the present invention is to make it possible to reliably apply suitable pressures to front and rear drive wheels to perform high acceleration driving easily.

Another object of the present invention is to make it possible to apply suitable wheel pressures between adherence rollers and a rail.

Still another object of the present invention is to make it possible to easily adjust wheel pressures applied between the adherence rollers and the rail in accordance with the maximum acceleration or the like of the carriage.

Means for Solving the Problems

According to the present invention, a carriage has front and rear drive wheels to travel on at least a rail with increased wheel pressures, and the carriage comprises:

at least a pair of front rollers and at least a pair of rear rollers provided in a front and a rear positions on front and rear sides of the carriage, the front rollers contacting the rail, and being provided on a side vertically opposite to the front drive wheel, the rear rollers contacting the rail, and being provided in a front and a rear positions on a side vertically opposite to the rear drive wheel;

at least a front rocking base capable of rocking relative to a vehicle body of the carriage, around an intermediate point between the pair of front rollers as a center, the pair of front rollers being connected to the front rocking bases; and

at least a rear rocking base capable of rocking relative to a vehicle body of the carriage, around an intermediate point between the pair of rear rollers as a center, the pair of rear rollers being connected to the rear rocking base.

Preferably, each of said front rocking base and rear rocking base having a rocking shaft connected rotatably to a connecting member, each connecting member having one end connected rotatably to the vehicle body and another end connected to the vehicle body with a resilient member for applying a biasing force to the rollers toward the rail.

In particular, preferably, the spring has a freely adjustable spring force.

Advantages of the Invention

In the carriage of the present invention, at least a pair of rollers are attached to rocking bases, and the rocking bases are provided at each of front and rear sides of the carriage. As a result, an additional force corresponding to the wheel pressure between the rollers and the rail is reliably applied to each of the front and rear drive wheels. Therefore, the influence by an inertial force due to acceleration of the carriage is reduced, and it is possible to apply the required wheel pressures to the front and rear drive wheels. Both of the front and rear drive wheels can be driven by large torques. Thus, high acceleration driving is performed easily.

Preferably, at least a pair of front rocking bases and at least a pair of rear rocking bases are biased by resilient members through the connecting members, respectively. Thus, the rollers can be biased by a compact mechanism. In comparison with the case in which rollers are vertically positioned by adjusting the positions of screws to move forward or backward, the wheel pressure between the rollers and the rail can be regulated easily within a suitable range. Further, even if abrasion of the rollers or the drive wheels occur, the wheel pressure between the rollers and the rail does not change significantly.

Further, preferably, the spring force is adjustable. In this case, in correspondence with the maximum acceleration of the carriage, the height of the center of the gravity or the like of the carriage, it is possible to set the spring force to have a suitable value.

In the present invention, at least a pair of front rollers and at least a pair of rear rollers are provided on front and rear sides of the carriage. The front rollers contact the rail, and are provided on a side vertically opposite to the front drive wheel. The rear rollers contact the rail, and are provided on a side vertically opposite to the rear drive wheel. Rocking bases capable of rocking relative to a vehicle body of the carriage, around an intermediate point between the pair of rollers as a center are provided. The pair of front rollers and the pair of rear rollers are connected to the front rocking base and the rear rocking base respectively.

The carriage is driven to travel using the drive wheels.

Brief Description of the Drawings

[FIG. 1]

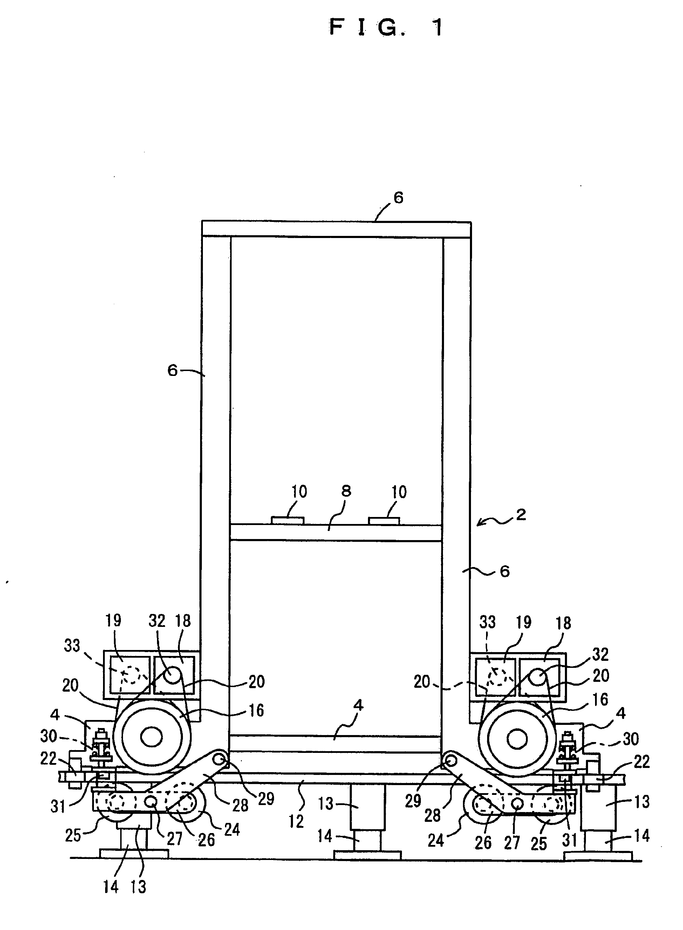

FIG. 1 is a side view showing a stacker crane according to an embodiment.

[FIG. 2]

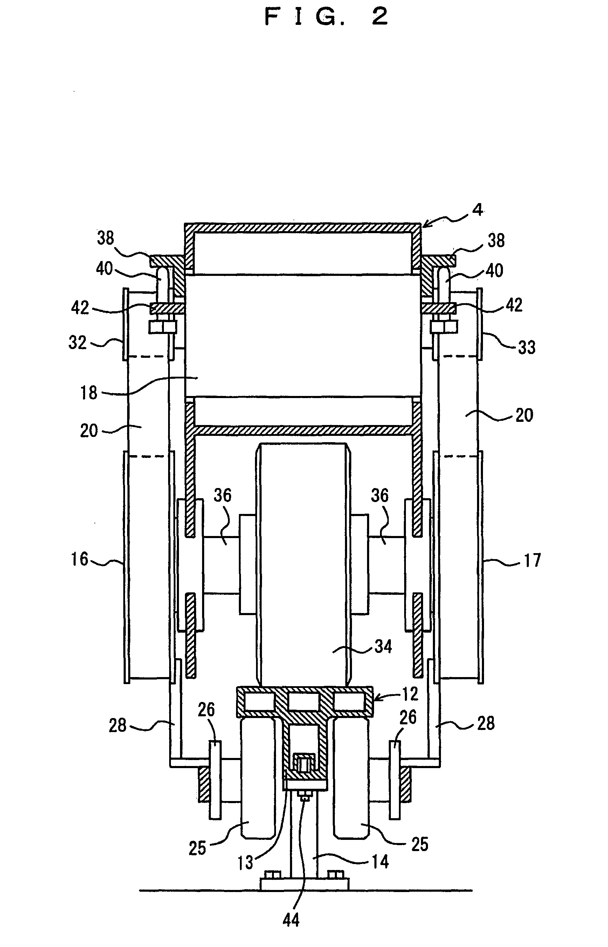

FIG. 2 is a partial cross sectional view in a vertical direction showing components and belt driving of a drive wheel using travel motors in the stacker crane according to the embodiment.

[FIG. 3]

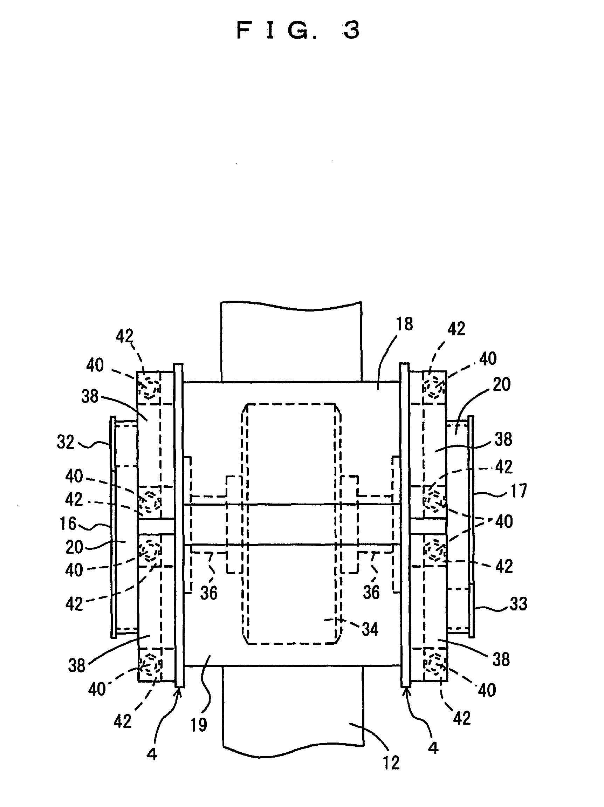

FIG. 3 is a plan view showing main components and positions of the travel motors for driving the drive wheel in the stacker crane according to the embodiment.

[FIG. 4]

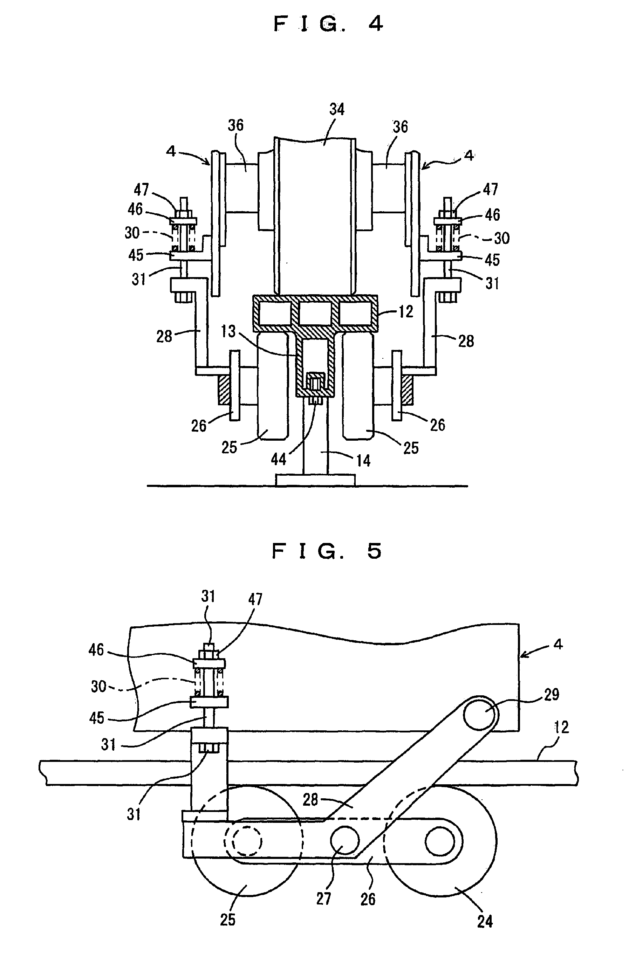

FIG. 4 is a front view showing main components of a mechanism of applying wheel pressures to adherence rollers in the stacker crane according to the embodiment.

[FIG. 5]

FIG. 5 is a side view showing main components of the mechanism of applying wheel pressures to a pair of front and rear adherence rollers in the stacker crane according to the embodiment.

[FIG. 6]

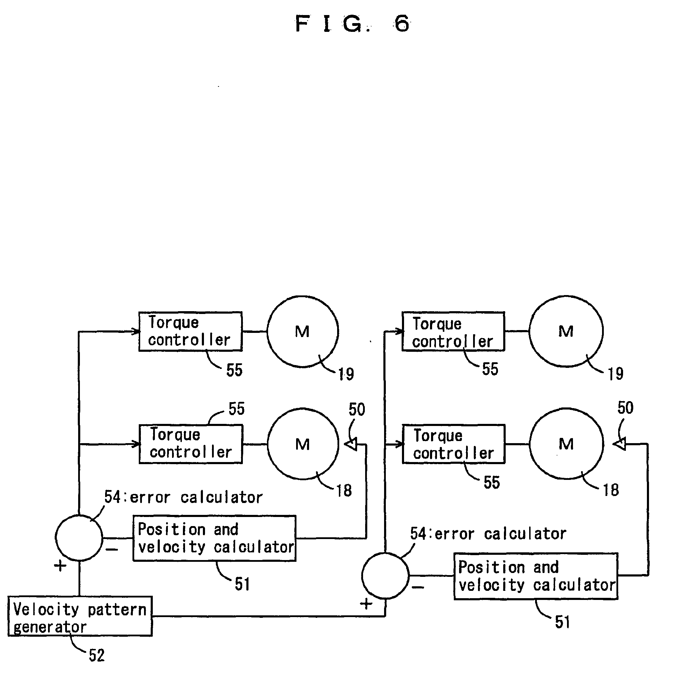

FIG. 6 is a block diagram showing control of four travel motors in the stacker crane according to the embodiment.

[FIG. 7]

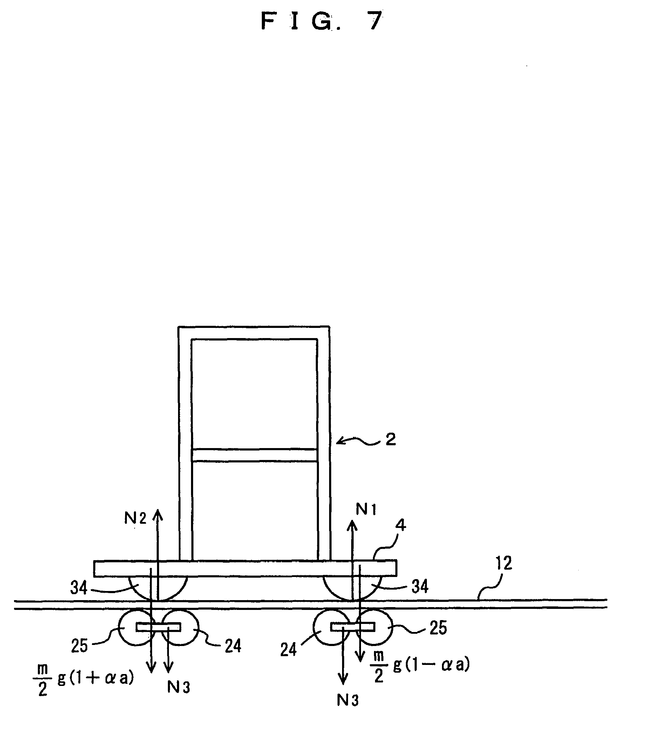

FIG. 7 is a view illustrating wheel pressures applied to front and rear drive wheels in the stacker crane according to the embodiment.

Description of the numerals

2:        stacker crane
4:        carriage

6:          mast
8:          elevation frame
10:         transfer apparatus
12:         traveling rail
13:         first leg
14:         second leg
16, 17:     pulley
18, 19:     travel motor
20:         belt
22:         side roller
24, 25:     adherence roller
26:         rocking base 27, 29: pin
29:         connecting member
30:         spring
31:         bolt
32, 33:     pulley
34:         drive wheel
36:         drive shaft
38:         motor support
40, 44:     bolt
42, 45:     fixed member
46:         plate
47:         nut
50:         encoder
51:         position and velocity calculator
52:         velocity pattern generator
54:         error calculator
55:         torque controller

EMBODIMENT

FIGS. 1 to 7 show an embodiment of a stacker crane 2 as an example. In the drawings, a reference numeral 4 denotes a carriage. An additional carriage may be provided in an upper part of the stacker crane 2. A reference numeral 6 denotes a mast. Though the mast has a gate shape in the illustrated embodiment, the shape of the mast 6 can be determined arbitrarily. A reference numeral 8 denotes an elevation frame. For example, a transfer apparatus 10 such as a slide fork is mounted on the elevation frame 8 along the mast 6. By the elevation frame 8, the height of the center of the gravity of the stacker crane 2 changes. A reference numeral 12 denotes a traveling rail, a reference numeral 13 denotes a first leg, and a reference numeral 14 denotes a second leg. By keeping the first leg 13 at a certain height, and allowing the second leg 14 to take a plurality of heights, it is possible to change the height of the traveling rail 12 relative to the ground level.

Reference numerals 16 and 17 denote pulleys. The pulleys 16 are provided respectively at front and rear positions of on one of the left and right sides of the carriage 4, and the pulleys 17 are provided respectively at front and rear positions on the other of the left and right sides of the carriage 4. Reference numerals 18 and 19 denote travel motors. A pair of the travel motors 18, 19 are provided on each of the front and rear sides of the carriage 4. The pulleys 16 and 17 are driven through belts 20. Reference numerals 22 denote side rollers provided at four positions, i.e., front left, front right, rear left, and rear right positions for limiting the position of the carriage 4 in the left-right direction with respect to the traveling rail 12. In the specification, the front and rear sides of the stacker crane 2 are defined along the traveling direction. The left-right direction is a direction perpendicular to the traveling direction in a horizontal plane, in which articles are transferred by a transfer apparatus 10.

Reference numerals 24, 25 denote adherence rollers. Hereinafter, the adherence rollers are also simply referred to as the "rollers". The adherence rollers 24, 25 contact the bottom surface of the traveling rail 12 to increase the wheel pressure applied to the drive wheel 34 (FIGS. 2 to 4). The rollers 24, 25 are attached to rocking bases 26 such that the rollers 24, 25 contact the bottom surface of the traveling rail 12 at substantially the same wheel pressure. Each of the rocking bases 26 is connected to a connecting member 28 using a pin 27 such that rocking movement of the rocking bases 26 is permitted. An end of the connecting member 28 is rotatably connected to the carriage 4 using a pin 29, and the other end of the connecting member 28 is connected to the carriage 4 through a bolt 31 and a spring 30 such that the rocking base 26 is biased upwardly.

As shown in FIGS. 2 and 3, the pulley 32 is provided at the drive shaft of the travel motor 18, and the pulley 33 is provided at the drive shaft of the travel motor 19. The pulley 32 and the pulley 33 are connected to the pulleys 16, 17 through the belts 20. The pulley 32 and the pulley 16 are provided at the front and rear positions of one of the left and right sides of the carriage 4, and the pulley 33 and the pulley 17 are provided at the front and rear positions of the other of the left and right sides of the carriage 4. The diameter of the pulley 32 and the diameter of the pulley 33 have the same size, and the diameter of the pulley 16 and the diameter of the pulley 17 have the same size. Based on the ratio between these diameters, the output of the motors 18, 19 are controlled for deceleration to eliminate the necessity of reduction gears. A reference numeral 34 denotes the drive wheel, and a reference numeral 36 denotes a drive shaft of the drive wheel 34. The travel motors 18, 19 are arranged above the drive wheel 34 such that the drive shaft of the travel motor 18 and the drive shaft of the travel motor 19 are oriented oppositely in the left-right directions in a horizontal plane. In the structure, the drive wheel 34 is driven by a large torque, and the overall length of the carriage 4 is reduced. For example, the number of travel motors for each drive wheel may be four. The travel motors 18, 19 are fixed to motor supports 38. The motor supports 38 are coupled to fixed members 42 fixed to the carriage 4 using bolts 40. By adjusting the height of the bolts 40, it is possible to adjust the tension force applied to the belts 20.

In the embodiment, the drive wheels 34 are provided on front and rear sides of the carriage 4. The drive wheels 34 are driven by the travel motors 18, 19 through the belts 20. Using the ratios between the diameters of the pulleys 32, 33 and between the diameters of the pulleys 16, 17, deceleration is performed to eliminate the necessity of reduction gears. On both of the front and rear sides of the carriage 4, travel units having the same structure including the travel motors 18, 19, the drive wheel 34, or the like are used.

As shown in e.g., FIG. 2, the first leg 13 and the second leg 14 are connected by a bolt 44. As describe above, in the case where the second leg 14 can take a plurality of heights, it is possible to change the height of the traveling rail 12 from the ground level. Preferably, the diameters of the adherence rollers 24, 25 should be changed, e.g., depending on the maximum acceleration, or the height of the center of gravity of the stacker crane 2, i.e., the height of the mast 6 or the weight of the transported article. As a result, it becomes necessary to change the height position of the traveling rail 12. In the case where the second leg 14 can take a plurality of heights, it is easy to change the height position of the traveling rail 12.

As shown in FIGS. 4 and 5, the bolt 31 attached to an end of the connecting member 28 passes through the fixed member 45 fixed to the carriage 4, and then, passes through a spring 30 between the connecting member 28 and a plate 46. The bolt 31 is fixed to the plate 46 using a nut 47. Thus, by adjusting the position of the nut 47, it is possible to freely adjust the upward biasing force by the spring 30, and it is possible to adjust the wheel pressure applied to each of the front and rear drive wheels 34.

FIG. 6 shows a control mechanism for the travel motors 18, 19. For example, encoders 50 are attached to front and rear travel motors 18 to monitor the rotation numbers. Position and velocity calculators 51 determine the current position and the velocity of the carriage. The error between the object position and the present position calculated by a velocity pattern generator 52 and the error between the object velocity and the present velocity calculated similarly are calculated by error calculators 54. Torque controllers 55 control travel motors 18, 19. In the control of FIG. 6, the travel motors 18 are masters, and the travel motors 19 are slaves. That is, the travel motors on one of the left and right sides are masters, and the travel motors on the other of the left and right sides are slaves. In the case where the wheel pressure between the adherence rollers and the traveling rail is increased to reduce the influence of acceleration of the stacker crane, the control is implemented by using one of the four motors 18, 19 as a master, and using the other three travel motors 18, 19 as slaves.

FIG. 7 shows a model of wheel pressures applied to front and rear drive wheels 34 of the stacker crane 2. Assuming that the mass, and acceleration of the stacker crane 2 are "m" and "a", respectively, due to the inertial force applied to the center of the gravity of the stacker crane 2, the gravity "mg" is not equally distributed to the front and rear drive wheels. Therefore, the gravity supported by the front drive wheel can be expressed by "mg(1-αa)/2 (α is a proportionality coefficient)", and the gravity supported by the rear drive wheel can be expressed by "mg (1+αa)/2". It is assumed that wheel pressure applied to the rollers of the front and rear two wheels of the carriage 4 is N3. Since the gravity applied front and rear positions of the carriage 4 changes, the wheel pressures N1, N2 applied to the drive wheels 34 are expressed as follows:

$$N1 = mg(1\text{-}\alpha a)/2 + N3 = mg/2 + N3 - \alpha amg/2$$

$$N2 = mg(1\text{+}\alpha a)/2 + N3 = mg/2 + N3 + \alpha amg/2$$

Even during high acceleration driving of the stacker crane 2, it is possible to increase the wheel pressures applied to the front and rear drive wheels 34 by the wheel pressure N3. Thus, the necessity of limiting the output torque of the travel motor for the smaller wheel pressure is reduced.

The following advantages are obtained in the embodiment.

1) Since the wheel pressures applied to the drive wheels 34 are increased, high acceleration driving becomes possible.

2) By the rocking bases 26, the pair of rollers 24, 25 equally contact the rail 12.

3) By the spring 30 and the connecting member 28, the wheel pressures of the rollers 24, 25 can be adjusted easily. Further, even if abrasion of the rollers 24, 26 or the drive wheels 34 occurs, it is possible to maintain the wheel pressures to have substantially suitable values.

4) By driving each of the front and rear drive wheels 34 using the pair of travel motors 18, 19, high acceleration driving becomes possible.

5) By providing the pair of travel motors 18, 19 above the drive wheel 34, it is possible to reduce the overall length of the stacker crane 2.

6) By arranging the drive shafts of the pair of the travel motors 18, 19 in parallel, orienting oppositely to the left and right of the stacker crane 2, the travel motors 18, 19 can be provided in a compact space.

7) Using the ratios between the diameters of the pulleys 32, 33 and between the diameters of the pulleys 16, 17 for deceleration, the necessity of reduction gears is eliminated.

Although the embodiment has been descried in connection with the case in which the carriage of the stacker crane 2 is used as an example, the type of the carriage can be determined arbitrarily. In the case of using a carriage of an overhead traveling vehicle, the drive wheels may contact the traveling rail upwardly. In this case, the adherence rollers may contact the traveling rail downwardly.

**Claims**

1. A carriage having front and rear drive wheels to travel on at least a rail with increased wheel pressures, the carriage comprising:

   at least a pair of front rollers and at least a pair of rear rollers provided on front and rear sides of the carriage, the front rollers contacting the rail, and being provided in a front and a rear positions on a side vertically opposite to the front drive wheel, the rear rollers contacting the rail, and being provided in a front and a rear positions on a side vertically opposite to the rear drive wheel;

   at least a front rocking base capable of rocking relative to a vehicle body of the carriage, around an intermediate point between the pair of front rollers as a center, the pair of front rollers being connected to the front rocking bases; and

   at least a rear rocking base capable of rocking relative to a vehicle body of the carriage, around an intermediate point between the pair of rear rollers as a center, the pair of rear rollers being connected to the rear rocking base.

2. The carriage according to claim 1, each of said front rocking base and rear rocking base having a rocking shaft connected rotatably to a connecting member, each connecting member having one end connected rotatably to the vehicle body and another end connected to the vehicle body with a resilient member for applying a biasing force to the rollers toward the rail.

3. The carriage according to claim 2, the spring having a freely adjustable spring force.

4. A method of driving a carriage having front and rear drive wheels to travel on at least a rail, the method comprising the steps of:

   providing at least a pair of front rollers and at least a pair of rear rollers on front and rear sides of the carriage, the front rollers contacting the rail, and being provided on a side vertically opposite to the front drive wheel, the rear rollers contacting the rail, and being provided on a side vertically opposite to the rear drive wheel;

   providing at least a front rocking base capable of rocking relative to a vehicle body of the carriage, around an intermediate point between the pair of front rollers as a center, the pair of front rollers being connected to the front rocking bases;

   providing at least a rear rocking base capable of rocking relative to a vehicle body of the carriage, around an intermediate point between the pair of rear rollers as a center, the pair of rear rollers being connected to the rear rocking base; and
driving the carriage to travel using the drive wheels.

# F I G. 1

# F I G. 2

# F I G. 3

# F I G . 4

# F I G . 5

# F I G. 6

# F I G. 7

**EP 1 897 838 A2**

**REFERENCES CITED IN THE DESCRIPTION**

**Patent documents cited in the description**

- JP 2005041383 A